# EUROPÄISCHE PATENTSCHRIFT

(11) **EP 0 814 110 B1**
(45) Veröffentlichungstag und Bekanntmachung des Hinweises auf die Patenterteilung: **28.02.2001**
(21) Anmeldenummer: 97108564.2
(22) Anmeldetag: 28.05.1997
(51) Int. Cl.: C08G 77/04, C09D 183/04, C04B 41/49

(54) **Oligomerengemisch kondensierter Alkylalkoxysilane**
Mixture of oligomers of condensed alkylalkoxysilanes
Mélange d'oligomères d'alkylalkoxysilanes

(30) Priorität: 17.06.1996 DE 19624032
(43) Veröffentlichungstag der Anmeldung: 29.12.1997
(73) Patentinhaber: Degussa-Hüls Aktiengesellschaft, 60287 Frankfurt am Main (DE)
(72) Erfinder: Standke, Burkhard, Dr., 79540 Lörrach (DE); Edelmann, Roland, 79664 Wehr (DE); Frings, Albert, Dr., 79618 Rheinfelden (DE); Horn, Michael, Dr., 79618 Rheinfelden (DE); Jenkner, Peter, Dr., 79618 Rheinfelden (DE); Laven, Ralf, Dr., 79739 Niederdossenbach (DE); Monkiewicz, Jaroslaw, Dr., 79618 Rheinfelden (DE)
(74) Vertreter: Olbricht, Gerhard, Dr.

(56) Entgegenhaltungen:
- EP-A- 0 049 365
- EP-A- 0 518 057
- EP-A- 0 579 453
- EP-A- 0 675 128
- EP-A- 0 716 127
- WO-A-92/06101
- J.K.CRANDALL, C. MOREL-FOURRIER: "Siloxanes from the hydrolysis of isopropyltrimethoxysilane." JOURNAL OF ORGANOMETALLIC CHEMISTRY, Bd. 489, 1995, Seiten 5-13, XP004024184

## Beschreibung

Die Erfindung betrifft Oligomerengemische kettenförmig und/oder cyclisch kondensierter Alkylalkoxysilane, ein Verfahren zu deren Herstellung und ihre Verwendung.

Alkyltrialkoxysilane setzen bei der Hydrolyse Alkohol frei. In der Menge beträgt dieser Hydrolysealkohol beispielsweise bei Octyltriethoxysilan rund 50 Gew.-% des eingesetzten Trialkoxysilans. - Viele Anwendungen bleiben für die Alkyltrialkoxysilane daher verschlossen oder werden hierdurch beeinträchtigt, z. B. wegen notwendigem Explosionsschutz oder aus ökologischen Gründen - Stichwort: VOC = volatile organic compounds. Aus anwendungstechnischer Sicht wäre es jedoch oft wünschenswert, Stoffe mit Eigenschaften ähnlich denen der reinen Alkyltrialkoxysilane verfügbar zu haben, ohne obige Nachteile in Kauf nehmen zu müssen. Solche Stoffe könnten insbesondere bei der Hydrophobierung mineralischer Oberflächen eingesetzt werden.

Aus der europäischen Patentanmeldung Nr. 518 057 sind Gemische von Siloxan-Oligomeren mit einem Oligomerisierungsgrad von 0 bis 8 bekannt, wobei die Siloxane pro Si-Atom höchstens eine Vinyl-Gruppe sowie Methoxy- bzw. Ethoxy-Gruppen und gegebenenfalls Alkyl-Gruppen mit 1 bis 18 C-Atomen enthalten. Ferner offenbart die EP 0 518 057 A1 ein Verfahren zur Herstellung dieser Siloxan-Gemische. Die Siloxan-Gemische, die sich aufgrund ihrer Funktionalisierung durch Vinyl-Gruppen auszeichnen, sind insbesondere als Vernetzungsmittel bei der Herstellung von Kabelmassen auf der Basis thermoplastischer Polyolefine und ähnlicher Anwendungen im Zusammenspiel mit organischen, vernetzbaren Stoffen geeignet.

EP-A-0 579 453 beschreibt ein Verfahren zur Herstellung einer Mischung aus Alkoxysilanen, Alkoxyfunktionellen Oligomeren oder Silanolen und deren Verwendung zur Hydrophobierung von Baustoffen.

Der Erfindung lag die Aufgabe zugrunde, eine Flüssigkeit bereitzustellen, die geeignet ist, insbesondere auf mineralische Oberflächen aufzuziehen und eine Benetzung der mineralischen Oberflächen durch eine hydrophile Flüssigkeit, beispielsweise Wasser, weitgehend zu verhindern, d. h. die mineralischen Oberflächen zu hydrophobieren, und die beim Aufbringen auf mineralische Oberflächen unter Zusatz von Wasser deutlich weniger Alkohole freisetzt, als bei der Anwendung von Alkyltrialkoxysilanen in konzentrierter Form unter entsprechenden Bedingungen.

Die gestellte Aufgabe wird erfindungsgemäß entsprechend den Angaben der Patentansprüche gelöst.

Es wurde nun gefunden, daß beispielsweise aus Octyltriethoxysilan durch kontrollierte Hydrolyse- und Kondensationsreaktion in Gegenwart eines sauren Katalysators und nachfolgender destillativer Entfernung des Hydrolysealkohols unter vermindertem Druck, wobei die destillative Aufarbeitung des Reaktionsgemisches unter weitgehend schonenden Bedingungen erfolgt, ein niedrigviskoses Gemisch an Octylethoxysiloxanen erhalten wird, worin der Gehalt an Ethoxy-Gruppen bei weniger als 20 Gew.-% und der Gehalt an freiem Ethanol bei weniger als 1,5 Gew.-% liegt und einen Flammpunkt von 125 °C besitzt - hierzu im Vergleich: reines Octyltriethoxysilan besitzt einen Flammpunkt von 109 °C. Darüber hinaus eignen sich die erfindungsgemäßen Oligomerengemische in hervorragender Weise, um mineralische Oberflächen zu hydrophobieren, ohne daß dabei - im Vergleich zur Anwendung von Alkyltrialkoxysilanen in konzentrierter Form - erhebliche Mengen an Alkoholen durch Hydrolyse frei werden.

Gegenstand der vorliegenden Erfindung ist daher ein Oligomerengemisch kettenförmig und/oder cyclisch kondensierter Alkylalkoxysilane mit einer Viskosität von weniger als 100 mPa s, wobei das Oligomerengemisch weniger als 2 Gew.-% an freien Alkoholen enthält und die kondensierten Alkoxysilane der allgemeinen Formel I 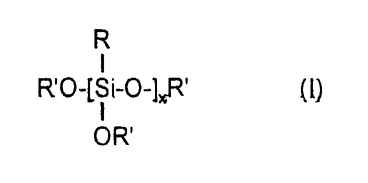 worin R eine Alkylgruppe mit 3 bis 18 C-Atomen darstellt,
R' einen Methylrest oder einen Ethylrest oder ein Wasserstoffatom sowie einen Methylrest oder-ein Wasserstoffatom sowie einen Ethylrest darstellt,
der Oligomerisierungsgrad im Bereich von 2 ≤ x ≤ 20 liegt
und der Quotient aus dem molaren Verhältnis [Si/Alkoxy-Gruppierung] ≥ 1 ist,
und/oder der allgemeinen Formel II 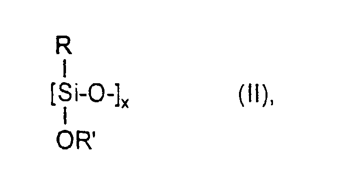 worin R eine Alkylgruppe mit 3 bis 18 C-Atomen darstellt,
R' einen Methylrest oder einen Ethylrest oder ein Wasserstoffatom sowie einen Methylrest oder ein Wasserstoffatom sowie einen Ethylrest darstellt,
der Oligomerisierungsgrad mit x ≥ 3 ist und
der Quotient aus dem molaren Verhältnis [Si/Alkoxy-Gruppierung] ≥ 1 ist,
genügen, erhältlich durch Hydrolyse und Kondensation von Alkyltrialkoxysilanen, wobei die eingesetzten Silane Alkyl-Gruppen mit 3 bis 18 C-Atomen und Methoxy- und/oder Ethoxy-Gruppen als Alkoxy-Gruppierungen tragen, unter Einsatz von mehr als 1 mol Wasser pro 1 mol Si und unter Einsatz von HCI als Katalysator und destillativer Aufarbeitung des erhaltenen Reaktionsgemisches unter vermindertem Druck bei einer Sumpftempepatur von weniger als 95 °C.

Die erfindungsgemäßen Oligomerengemische weisen vorzugsweise einen Gehalt an Alkoxy-Gruppen von mehr als 0,01 Gew.-% und weniger als 20 Gew.-% auf, die Werte sind jeweils auf das Gewicht des vorliegenden Oligomerengemisches bezogen.

Darüber hinaus enthalten die erfindungsgemäßen Oligomerengemische bevorzugt Alkyl-Gruppen - in den allgemeinen Formeln als R dargestellt - mit jeweils derselben Kettenlänge - Insbesondere ist R eine Octyl-Gruppe.

Gegenstand der vorliegenden Erfindung ist auch das Verfahren zur Herstellung eines Oligomerengemisches nach Anspruch 1 durch Hydrolyse und Kondensation von Alkyltrialkoxysilanen, wobei die eingesetzten Silane Alkyl-Gruppen mit 3 bis 18 C-Atomen und Methoxy- und/oder Ethoxy-Gruppen als Alkoxy-Gruppierungen tragen, unter Einsatz von mehr als 1 mol Wasser pro 1 mol Si und unter Einsatz von HCl als Katalysator, und destillativer Aufarbeitung des erhaltenen Reaktionsgemisches unter vermindertem Druck bei einer Sumpftemperatur von weniger als 95 °C.

Geeigneterweise führt man beim erfindungsgemäßen Verfahren die Hydrolyse und Kondensation der eingesetzten Alkyltrialkoxysilane unter Einsatz von Methanol und/oder Ethanol als Verdünnungs- sowie Lösemittel durch. Die Menge an Lösemittel wird in der Regel so gewählt, daß ein einphasiges Gemisch entsteht.

Für die Hydrolyse von Octyltriethoxysilan kann man nach dem erfindungsgemäßen Verfahren beispielsweise 1,2 mol Wasser pro 1 mol Silan einsetzen.

Als Hydrolysekatalysator, der bei dem erfindungsgemäßen Verfahren in der Regel bei der späteren destillativen Aufarbeitung des Reaktionsgemisches wieder nahezu quantitativ entfernt werden kann, wird vorzugsweise HCl eingesetzt. Es können aber auch andere Säuren als Katalysator verwendet werden.

Die Hydrolyse- und Kondensationsreaktion wird beim erfindungsgemäßen Verfahren in der Regel schonend, vorzugsweise bei einer Temperatur im Bereich von 10 bis 80 °C, besonders vorzugsweise von 30 bis 78 °C, durchgeführt. Die Umsetzung kann auch unter Schutzgas durchgeführt werden. Ferner wird die Umsetzung geeigneterweise unter Normaldruck durchgeführt.

Die Hydrolyse- und Kondensationsreaktion wird beim erfindungsgemäßen Verfahren bevorzugt unter Rühren und über einen Zeitraum von 1 bis 2 Stunden durchgeführt.

Ein so erhaltenes Reaktionsgemisch wird beim erfindungsgemäßen Verfahren destillativ unter vermindertem Druck aufgearbeitet. Dabei erfolgt, ebenfalls unter weitgehend schonenden Bedingungen, die Entfernung eines Großteils der Menge an freiem Alkohol, geeigneterweise wird gleichzeitig die Katalysatorkomponente mit ausgetragen. Bei der destillativen Aufarbeitung sollte die Sumpftemperatur insbesondere nicht oberhalb von 90 °C liegen. Bevorzugt wird das Reaktionsgemisch unter Einleiten eines Inertgasstromes, beispielsweise Stickstoff, aufgearbeitet. Als Rückstand der destillativen Aufarbeitung wird das erfindungsgemäße Produkt als klare, niedrigviskose Flüssigkeit erhalten.

Ein besonderer Vorteil der erfindungsgemäßen Oligomerengemische ist es auch, daß deren Flammpunkt oberhalb der Flammpunkte der entsprechenden reinen Alkyltrialkoxysilane oder deren alkoholischen Lösungen liegt. So liegen die Flammpunkte der erfindungsgemäßen Oligomerengemische vorzugsweise oberhalb 100 °C, besonders vorzugsweise oberhalb 110 °C.

Gegenstand der vorliegenden Erfindung ist ferner die Verwendung eines erfindungsgemäßen Oligomerengemisches nach Anspruch 1 oder eines nach Anspruch 6 hergestellten Oligomerengemisches für die Hydrophobierung von mineralischen Oberflächen.

Stoffe mit solchen mineralischen Oberflächen sind beispielsweise: Baustoffe wie Beton, Zement, Mörtel, Kalksandstein, Ziegel oder jegliche Art von Natursteinen oder auch anorganische Pulver, wie beispielsweise gängige Füllstoffe oder Pigmente, Aluminiumoxide oder Aluminiumoxidhydrate, wie Aluminiumtrihydrat, Kieselsäuren, Quarz, Glimmer, Titan-, Zirkon-, Hafniumoxide oder Titan-, Zirkon-, Hafniumoxidhydrate, Eisenoxide bzw. Eisenoxidhydrate oder Cobalt bzw. Cobaltoxidhydrate oder auch Kalk und Tonminerale sowie Eisenglimmer, Talkum, Zinkphosphate und Calciummetaphosphate.

Geeigneterweise kann man ein erfindungsgemäßes Oligomerengemisch bei der Herstellung mineralischer Stoffe mit hydrophoben Eigenschaften einsetzen, insbesondere für pulverförmige Stoffe, vorzugsweise nach Aufbringen einer oxidischen Zwischenschicht, insbesondere einer Siliziumoxid- und/oder einer Aluminimoxidschicht.

Die Erfindung wird durch das nachfolgende Beispiel näher erläutert:

### Beispiel

In einem 4 l Rührreaktor aus Glas mit Vakuum-, Dosier- und Destillationseinrichtung sowie Stickstoffeinleitrohr werden 2 208 g Octyltriethoxysilan vorgelegt und anschließend 168 g Wasser vorher gemischt mit 6,9 g 32 Gew.-% wäßriger HCl und 400 g Ethanol bei 30 - 70 °C unter Normaldruck zudosiert. Das klare Gemisch wird ca. 2 h bei ca. 77 °C unter leichtem Rückfluß gehalten. Es resultiert ein klares Reaktionsgemisch. Anschließend wird unter Anlegen von Vakuum bei von 400 mbar auf ca. 5 mbar fallendem Druck und einer Sumpftemperatur unter 95 °C bei gleichzeitigem Einleiten eines Stickstoffstromes Ethanol abdestilliert (ca. 7 h). Man isoliert 1 550 g Produkt mit folgenden Eigenschaften:
Freies Ethanol (gaschromatografisch): 1,3 Gew.-%
0,8 mol Ethoxygruppen pro mol Si (¹H-NMR)
Viskosität: 38,8 mPa·s (DIN 53 015)
Siedepunkt: 280 °C
Flammpunkt: 125 °C
Dichte: 0,95 g/ml
Cl-Gehalt: 66 Gew.-ppm
Oligomerisierungsgrad: 3 - 20, mittlere Molmasse 1 160 g/mol (GPC 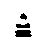 Gelpermeationschromatographie, SFC 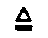 superkritische Flüssigkeitschromatographie)

## Patentansprüche

1. Oligomerengemisch kettenförmig und/oder cyclisch kondensierter Alkylalkoxysilane mit einer Viskosität von weniger als 100 mPa s, wobei das Oligomerengemisch weniger als 2 Gew.-% an freien Alkoholen enthält und die kondensierten Alkoxysilane der allgemeinen Formel I 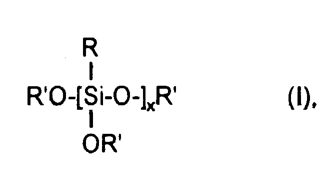 worin R eine Alkylgruppe mit 3 bis 18 C-Atomen darstellt,
R' einen Methylrest oder einen Ethylrest oder ein Wasserstoffatom sowie einen Methylrest oder ein Wasserstoffatom sowie einen Ethylrest darstellt,
der Oligomerisierungsgrad im Bereich von 2 ≤ x ≤ 20 liegt
und der Quotient aus dem molaren Verhältnis [Si/Alkoxy-Gruppierung] ≥ 1 ist, und/oder der allgemeinen Formel II 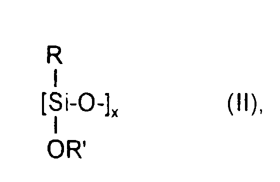 worin R eine Alkylgruppe mit 3 bis 18 C-Atomen darstellt,
R' einen Methylrest oder einen Ethylrest oder ein Wasserstoffatom sowie einen Methylrest oder ein Wasserstoffatom sowie einen Ethylrest darstellt,
der Oligomerisierungsgrad mit x ≥ 3 ist und
der Quotient aus dem molaren Verhältnis [Si/Alkoxy-Gruppierung] ≥ 1 ist,
genügen, erhältlich durch Hydrolyse und Kondensation von Alkyltrialkoxysilanen, wobei die eingesetzten Silane Alkyl-Gruppen mit 3 bis 18 C-Atomen und Methoxy- und/oder Ethoxy-Gruppen als Alkoxy-Gruppierungen tragen, unter Einsatz von mehr als 1 mol Wasser pro 1 mol Si und unter Einsatz von HCI als Katalysator und destillativer Aufarbeitung des erhaltenen Reaktionsgemisches unter vermindertem Druck bei einer Sumpftemperatur von weniger als 95 °C.

2. Oligomerengemisch nach Anspruch 1,
gekennzeichnet durch
einen Gehalt an Alkoxy-Gruppen von mehr als 0,01 Gew.-% und weniger als 20 Gew.-%, bezogen auf das Gewicht des vorliegenden Oligomerengemisches.

3. Oligomerengemisch nach Anspruch 1 oder 2,
dadurch gekennzeichnet,
daß R eine Alkyl-Gruppe mit jeweils derselben Zahl an C-Atomen ist.

4. Oligomerengemisch nach Anspruch 3,
dadurch gekennzeichnet
daß R eine Octyl-Gruppe ist.

5. Oligomerengemisch nach mindestens einem der Ansprüche 1 bis 4,
gekennzeichnet durch
einen Flammpunkt oberhalb von 100 °C.

6. Verfahren zur Herstellung eines Oligomerengemisches nach Anspruch 1 durch Hydrolyse und Kondensation von Alkyltrialkoxysilanen, wobei die eingesetzten Silane Alkyl-Gruppen mit 3 bis 18 C-Atomen und Methoxy- und/oder Ethoxy-Gruppen als Alkoxy-Gruppierungen tragen, unter Einsatz von mehr als 1 mol Wasser pro 1 mol Si und unter Einsatz von HCI als Katalysator und destillativer Aufarbeitung des erhaltenen Reaktionsgemisches unter vermindertem Druck bei einer Sumpftemperatur von weniger als 95 °C.

7. Verfahren nach Anspruch 6,
dadurch gekennzeichnet,
daß man die Hydrolyse und Kondensation der eingesetzten Alkyltrialkoxysilane unter Einsatz von Methanol und/oder Ethanol als Verdünnungs- sowie Lösemittel durchführt.

8. Verfahren nach Anspruch 6 oder 7,
dadurch gekennzeichnet,
daß man die Hydrolyse und Kondensation der eingesetzten Alkyltrialkoxysilane bei einer Temperatur zwischen 10 und 80 °C unter Normaldruck durchführt.

9. Verfahren nach mindestens einem der Ansprüche 6 bis 8,
dadurch gekennzeichnet,
daß man das Reaktionsgemisch unter Einleiten eines Inertgasstromes aufarbeitet.

10. Verwendung eines Oligomerengemisches nach Anspruch 1 oder eines nach Anspruch 6 hergestellten Oligomerengemisches für die Hydrophobierung von mineralischen Oberflächen.

11. Verwendung eines Oligomerengemisches nach Anspruch 10 für die Hydrophobierung pulverförmiger Stoffe.

## Claims

1. A mixture of oligomers of alkylalkoxysilanes condensed in the chain and/or cyclic form having a viscosity of less than 100 mPa s, in which the mixture of oligomers contains less than 2% by weight of free alcohols and the condensed alkoxysilanes satisfy the general formula I 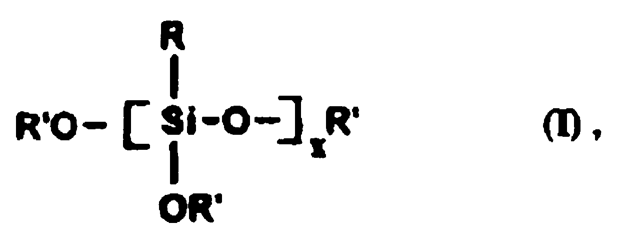 in which R signifies an alkyl group having 3 to 18 carbon atoms,
R' signifies a methyl radical or an ethyl radical or a hydrogen atom as well as a methyl radical or a hydrogen atom as well as an ethyl radical,
the degree of oligomerization is in the range 2 ≤ x ≤ 20
and the quotient of the molar ratio [Si/alkoxy group] ≥ 1,
and/or satisfy the general formula II 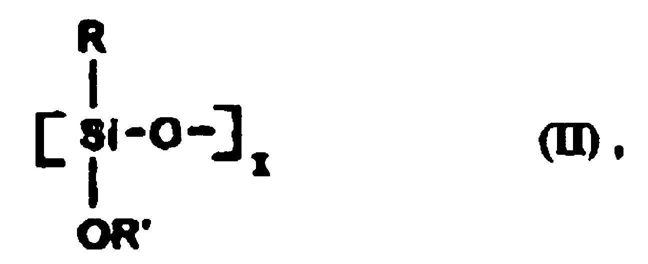 in which R signifies an alkyl group having 3 to 18 carbon atoms,
R' signifies a methyl radical or an ethyl radical or a hydrogen atom as well as a methyl radical or a hydrogen atom as well as an ethyl radical,
the degree of oligomerization is x ≥ 3
and the quotient of the molar ratio [Si/alkoxy group] ≥ 1,
obtainable by hydrolysis and condensation of alkyltrialkoxysilanes, where the silanes used bear alkyl groups having 3 to 18 carbon atoms and methoxy and/or ethoxy groups as alkoxy groups, with the use of more than 1 mol of water per 1 mol of Si and with the use of HCl as catalyst and with work-up by distillation of the resulting reaction mixture under reduced pressure at a bottom temperature of below 95°C.

2. A mixture of oligomers according to claim 1, which has a content of alkoxy groups of greater than 0.01% by weight and less than 20% by weight, based on the weight of the mixture of oligomers present.

3. A mixture of oligomers according to claim 1 or 2, wherein R is an alkyl group having in each case the same number of carbon atoms.

4. A mixture of oligomers according to claim 3, wherein R is an octyl group.

5. A mixture of oligomers according to at least one of claims 1 to 4, which has a flashpoint above 100°C.

6. A process for preparing a mixture of oligomers according to claim 1 by hydrolysis and condensation of alkyltrialkoxysilanes, where the silanes used bear alkyl groups having 3 to 18 carbon atoms and methoxy and/or ethoxy groups as alkoxy groups, with the use of more than 1 mol of water per 1 mol of Si and with the use of HCl as catalyst and with work-up by distillation of the resulting reaction mixture under reduced pressure at a bottom temperature of below 95°C.

7. A process according to claim 6, wherein the hydrolysis and condensation of the alkyltrialkoxysilanes used is carried out with the use of methanol and/or ethanol as diluent as well as solvent.

8. A process according to claim 6 or 7, wherein the hydrolysis and condensation of the alkyltrialkoxysilanes used is carried out at atmospheric pressure at a temperature from 10 to 80°C.

9. A process according to at least one of claims 6 to 8, wherein the reaction mixture is worked up with the introduction of an inert gas stream.

10. The use of a mixture of oligomers according to claim 1 or of a mixture of oligomers prepared according to claim 6 for rendering mineral surfaces hydrophobic.

11. The use of a mixture of oligomers according to claim 10 for rendering pulverulent substances hydrophobic.

## Revendications

1. Mélange d'oligomères d'alkylalkoxysilanes condensés sous forme de chaîne et/ou cycliquement ayant une viscosité de moins de 100 mPas, dans lequel le mélange d'oligomères contient moins de 2 % en poids d'alcools libres et en ce que les alkoxy silanes satisfont à la formule générale I 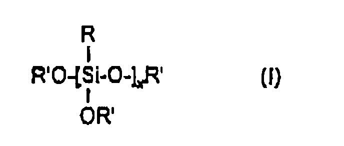 dans laquelle R représente un radical alkyle ayant de 3 à 18 atomes de carbone,
R' représente un reste méthyle ou un reste éthyle, ou un atome d'hydrogène ainsi qu'un reste méthyle, ou un atome d'hydrogène ainsi qu'un reste éthyle,
le degré d'oligomérisation se situe dans la zone de 2 ≤ x ≤ 20,
et en ce que le quotient à partir du rapport molaire (Si/groupement alkoxy) est ≥ 1,
et/ou de formule générale II 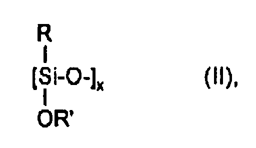 dans laquelle R représente un radical alkyle ayant de 3 à 18 atomes de carbone,
R' représente un reste méthyle ou un reste éthyle, ou un atome d'hydrogène ainsi qu'un reste méthyle, ou un atome d'hydrogène ainsi qu'un reste éthyle,
le degré d'oligomérisation est égal à x ≥ 3 et le quotient à partir du rapport molaire [Si/groupement alkoxy] est ≥ 1, accessible par hydrolyse et condensation d'alkyltrialkoxysilanes, dans lesquels les silanes utilisés portent des groupes alkyle ayant de 3 à 18 atomes de carbone, et des groupes méthoxy et/ou éthoxy comme groupements alkoxy, en utilisant plus d'1 mol d'eau pour 1 mol de Si et en utilisant du HCl comme catalyseur et un traitement par distillation du mélange réactionnel obtenu, sous pression réduite à une température de pot de moins de 95°C.

2. Mélange d'oligomères selon la revendication 1,
caractérisé par
une teneur en groupes alkoxy de plus de 0,01 % en poids et de moins de 20 % en poids, rapporté au poids du présent mélange d'oligomères.

3. Mélange d'oligomères selon la revendication 1 ou 2,
caractérisé en ce que
R est un groupe alkyle avec respectivement le même nombre d'atomes de carbone,

4. Mélange d'oligomères selon la revendication 3,
caractérisé en ce que
R est un groupe octyle.

5. Mélange d'oligomères selon au moins l'une quelconque des revendications 1 à 4,
caractérisé par
un point d'inflammation au-dessus de 100°C.

6. Procédé de production d'un mélange d'oligomères selon la revendication 1,
par hydrolyse et condensation d'alkyltrialkoxysilanes, dans lequel les silanes mis en oeuvre portent des groupes alkyle ayant de 3 à 18 atomes de carbone et des groupes méthoxy et/ou éthoxy en tant que groupements alkoxy en introduisant plus d'1 mol d'eau pour 1 mol de Si et HCl comme catalyseur, et traitement par distillation du mélange réactionnel obtenu, sous pression réduite à une température de pot inférieure à 95°C.

7. Procédé selon la revendication 6,
caractérisé en ce qu'
on effectue l'hydrolyse et la condensation des alkyltrialkoxysilanes mis en oeuvre, en introduisant le méthanol et/ou l'éthanol comme agent diluant ainsi que comme agent dissolvant.

8. Procédé selon la revendication 6 ou la revendication 7,
caractérisé en ce qu'
on effectue l'hydrolyse et la condensation des alkyltrialkoxysilanes utilisés à une température comprise entre 10 et 80°C sous pression normale.

9. Procédé selon au moins l'une quelconque des revendications 6 à 8,
caractérisé en ce qu'
on traite le mélange réactionnel sous introduction d'un courant de gaz inerte.

10. Utilisation d'un mélange d'oligomères selon la revendication 1, ou d'un mélange d'oligomères préparé selon la revendication 6, en vue de rendre hydrophobes les surfaces minérales.

11. Utilisation d'un mélange d'oligomères selon la revendication 10, pour rendre hydrophobes des substances pulvérulentes.
